# EUROPÄISCHE PATENTANMELDUNG

(11) **EP 1 600 323 A1**
(43) Veröffentlichungstag der Anmeldung: **30.11.2005**
(21) Anmeldenummer: 04090214.0
(22) Anmeldetag: 28.05.2004
(51) Int. Cl.: B60L 13/10, B60M 7/00

(54) **Magnetgleitschienenschnellbahn in einer geschlossenen glasröhre auf stelzen**

(71) Anmelder: Strauch, Gerda, Dipl.-Ing., 14193 Berlin (DE)
(72) Erfinder: Strauch, Gerda, Dipl.-Ing., 14193 Berlin (DE)

(57) **Zusammenfassung**

Bei der vorliegenden Erfindung handelt es sich um eine Magnetgleitschienen - Eisenbahn in einem geschlossenem Röhren-System, getrieben von Wechselstrom, der in einem Schienenwulst strömt und einem Magnet-Abnahmesystem gemeinsam, bei gleichzeitiger Nutzung von Solarstrom, zu Erzeugen auf dem oberen Streifen der geschlossenen Rohrleitungen und das Wesentliche besteht darin, dass der Gleiskörper als breite Wulst-Stromleitung in einer von ihr umfassten "Gleitbahn" aufgebaut ist und dabei den notwendigen Wechselstrom an einen als Magnet auf sie aufgesetzten Zug mit die Wulstschiene umfassender Gleitschiene abgibt und so der Bug des Wagons als Zugkraft und gleichzeitig das Heck als Schubkraft arbeitet. Das hat den Vorteil, das alle rollenden Teile, Räder, Achsen, Pleuelstangen und Zahnradsysteme, sowie auch Heizanlagen und Kessel entfallen können.

Was bleibt ist der erforderliche Stromabnehmer und - Wandler üblicher Konstruktion mit direkter Schalt- und Bremswirkung, automatisch gesteuert vom Triebwagen oder direkt vom Streckennetz.

Die Ummantelung des gesamten Zugsystems mit durchsichtigen, nicht stromleitenden Materialien den Fahrtwind von der Umwelt fernhält und damit keine Wirbel- oder Sogbildungen in der Umwelt entstehen können, insbesondere wenn die Führung in beiden Richtungen der Züge in getrennten Rohr - Leitungen erfolgt und gegebenenfalls nach unten entlüftet wird. Innerhalb der Bahnhöfe müssen lediglich auf der ganzen Zuglänge die äußeren Rohrleitungen um sich selbst gehoben werden können und damit das Ein- und Aussteigen der Reisenden oder bei Güterzügen das Verladen von Versandgütern ermöglichen.

Das Zugsystem muss auf seiner ganzen Länge mit besonderem Vorteil hochgestelzt werden, um Kreuzungsstellen im Verkehr grundsätzlich zu vermeiden. Das Streckennetz ist auf Fertigteilblöcken im Steckverfahren zu errichten und fest zu verankern, wobei unter dem Schienenwulst und neben den Zügen Laufgänge zur Wartung eingerichtet werden müssen. Außerdem sollten nach unten Abluftöffnungen so eingerichtet werden, das es keinen Luftdruckstau im Kanalsystem geben kann. Vorzugsweise können die Fertigteilstelzen und Abstandshalter auf den Güterzügen im Vorbau hergestellt und nach Trocknung und Festigung sofort versetzt werden.

## Beschreibung

Diese Magnetgleitschienen-Eisenbahn besteht aus einer dicken Wulst-Gleitschiene, um die der aufgesetzte Magnetzug herumgreift und durch die Stromabgabe zum Magneten mit geringem Abstand leicht gehoben wird und so die Antriebskraft an den Wechselstrom-Elektromotor üblicher Art abgibt, wobei die Zugkraft des Motors im Bug aktiviert wird, gleichzeitig im Heck Schubkraft entsteht.

Gleichzeitig müssen auf dem oberen Teil der Rohrleitung Aufnahmegeräte für Solarstrom üblicher Art über die ganze Länge installiert sein, die ständig in den Schienenwulst zusätzlichen Strom einspeisen.

Das hat den Vorteil, das alle rollenden Teile, Räder, Achsen, Pleuelstangen und Zahnradsysteme, sowie auch Heizanlagen und Kessel entfallen können.

Was bleibt ist der erforderliche Stromabnehmer und - Wandler üblicher Konstruktion mit direkter Schalt und Bremswirkung, automatisch gesteuert vom Triebwagen oder direkt vom Streckennetz.

Ein weiterer Vorteil besteht darin, dass die Ummantelung des gesamten Zugsystems mit durchsichtigen, nicht stromleitenden Materialien den Fahrtwind von der Umwelt fernhält und damit keine Wirbel- oder Sogbildungen in der Umwelt entstehen können, insbesondere wenn die Führung in beiden Richtungen der Züge in getrennten Rohr - Leitungen erfolgt und gegebenenfalls nach unten entlüftet wird. Innerhalb der Bahnhöfe müssen lediglich auf der ganzen Zuglänge die äußeren Rohrleitungen um sich selbst gehoben werden können und damit das Ein- und Aussteigen der Reisenden oder bei Güterzügen das Verladen von Versandgütem ermöglichen.

Das Zugsystem muss auf seiner ganzen Länge mit besonderem Vorteil hochgestelzt werden, um Kreuzungsstellen im Verkehr grundsätzlich zu vermeiden.

Das Streckennetz ist auf Fertigteilblöcken im Steckverfahren zu errichten und fest zu verankern, wobei unter dem Schienenwulst und neben den Zügen Laufgänge zur Wartung eingerichtet werden müssen. Außerdem sollten nach unten Abluftöffnungen so eingerichtet werden, das es keinen Luftdruckstau im Kanalsystem geben kann.

Vorzugsweise können die Fertigteilstelzen und Abstandshalter auf den Güterzügen im Vorbau hergestellt und nach Trocknung und Festigung sofort versetzt werden.

## Patentansprüche

1. Die Erfindung bezieht sich auf eine Magnetgleitschienen - Eisenbahn in einem geschlossenem Röhren - System, getrieben von Wechselstrom, der in einem Schienenwulst strömt und einem Magnet - Abnahmesystem gemeinsam, bei gleichzeitiger Nutzung von Solarstrom, zu Erzeugen auf dem oberen Streifen der geschlossenen Rohrleitungen und das Wesentliche besteht darin, dass der Gleiskörper als breite Wulst-Stromleitung in einer von ihr umfassten "Gleitbahn" aufgebaut ist und dabei den notwendigen Wechselstrom an einen als Magnet auf sie aufgesetzten Zug mit die Wulstschiene umfassender Gleitschiene abgibt und so der Bug des Wagons als Zugkraft und gleichzeitig das Heck als Schubkraft arbeitet.

2. Das gesamten Zugsystems muss in einem durchsichtigem Rohrsystem verlaufen, das in den Personenbahnhöfen und bei Güterzügen in den Verladebahnhöfen um sich selbst gehoben werden kann und damit das Ein- und Aussteigen der Reisenden oder bei Güterzügen das Verladen von Versandgütern ermöglichen.

3. Das gesamte Zugsystem muss auf seiner gesamten Länge hochgestelzt werden, um Kreuzungsstellen im Verkehr grundsätzlich zu vermeiden.

4. Das Streckennetz ist auf Fertigteilblöcken im Steckverfahren zu Errichten und fest zu verankern, wobei unter den Schienenwulst und neben den Zügen Laufgänge zur Wartung eingerichtet werden müssen.

5. Im unteren Bereich der Rohrleitungen müssen Abluftöffnungen so eingerichtet werden, dass es keinen Luftdruckstau im Kanalsystem geben kann.

6. Die Fertigteilstelzen und Abstandshalter können auf Güterzügen oder Lastwagen hergestellt werden und nach Trocknung und Festigung sofort versetzt werden.
